# DEMANDE DE BREVET EUROPEEN

(11) **EP 4 667 921 A1**
(43) Date de publication de la demande: **24.12.2025**
(21) Numéro de dépôt: 25182239.1
(22) Date de dépôt: 12.06.2025
(51) Int. Cl.: G01N 23/222

(54) **PROCÉDÉ D`ANALYSE D`UN SPÉCIMEN PAR ACTIVATION NEUTRONIQUE**

(30) Priorité: 21.06.2024 FR 2406712
(71) Demandeur: Commissariat à l'Energie Atomique et aux Energies Alternatives, 75015 Paris (FR)
(72) Inventeur: BLIDEANU, Valentin, 91191 GIF-SUR-YVETTE CEDEX (FR); RAPP, Benjamin, 91191 GIF-SUR-YVETTE CEDEX (FR); BESNARD-VAUTERIN, Clément, 91191 GIF-SUR-YVETTE CEDEX (FR)
(74) Mandataire: INNOV-GROUP

(57) **Abrégé**

Ce procédé comporte :
- l'activation (110) de plusieurs échantillons du spécimen en utilisant, pour chaque échantillon, une épaisseur traversée de matériau modérateur différente de l'épaisseur traversée utilisée pour activer les autres échantillons, et
- pour chaque échantillon activé, l'établissement (132) d'une concentration Nⁱ(R) d'un radio-isotope du composant recherché dans cet échantillon activé en utilisant seulement le rayonnement ionisant mesuré de cet échantillon, où l'exposant i est un identifiant de l'épaisseur traversée utilisée pour activer cet échantillon et R est un identifiant du radio-isotope du composant recherché, puis
- la détermination (134) d'une concentration N^{c}(C) du composant recherché dans le spécimen à partir des différentes concentrations Nⁱ(R) établies et de fluences prédéterminées de neutrons thermiques et de neutrons rapides pour chacune des épaisseurs du matériau modérateur utilisées pour activer les échantillons.

## Description

L'invention concerne un procédé et un système d'analyse d'un spécimen par activation neutronique. L'invention concerne également un dispositif d'activation d'échantillons pour la mise en œuvre de ce procédé d'analyse.

L'analyse par activation neutronique (AAN) (« Neutron Activation Analysis » en anglais) est une méthode d'analyse précise et non destructive largement utilisée dans divers domaines scientifiques et industriels pour déterminer la composition élémentaire d'échantillons. Cette technique repose sur l'interaction des neutrons avec les noyaux des éléments présents dans l'échantillon.

Le processus consiste en l'utilisation de neutrons initialement énergétiques appelés neutrons rapides provenant d'une source de neutrons rapides. Ces neutrons sont ensuite ralentis par un matériau modérateur pour diminuer considérablement leur énergie, ils sont alors appelés neutrons thermiques. Lorsque les neutrons thermiques sont absorbés par les noyaux constituant l'échantillon par le phénomène de capture neutronique, ceci entraîne la formation de radio-isotopes instables qui peuvent subir une désintégration radioactive. Les rayonnements ionisants qui accompagnent la désintégration de ces radio-isotopes nouvellement formés sont mesurés à l'aide de détecteurs appropriés. La mesure de l'intensité et de l'énergie de ces rayonnements ionisants permet d'identifier les différents éléments présents dans l'échantillon et de déterminer leurs concentrations. Typiquement, les rayonnements ionisants mesurés sont les rayonnements gamma. Un exemple de mise en œuvre de ce processus est décrit dans la demande CN115032221A.

Les avantages de l'analyse par activation neutronique comprennent sa sensibilité élevée, sa capacité à détecter de faibles concentrations d'éléments et sa non-destructivité, qui permet des analyses successives des mêmes échantillons. De plus, elle peut détecter la plupart des éléments du tableau périodique.

Les applications de cette technique sont diverses. Elle est largement utilisée dans l'analyse de matériaux tels que les métaux, les alliages, les céramiques et les polymères. Elle est également appliquée en archéologie, en géologie notamment dans le cadre de prospection minière, dans les sciences médicales pour le diagnostic et l'étude des tissus biologiques, ainsi que dans la surveillance environnementale pour détecter la contamination radioactive et analyser les échantillons environnementaux. L'analyse par activation neutronique joue également un rôle crucial en criminologie en permettant l'analyse des éléments présents sur les scènes de crime et sur les objets de preuve. Cette technique aide à identifier la composition des matériaux, tels que des fibres de tissu ou des éclats de verre, fournissant ainsi des indices sur l'origine des éléments trouvés. De plus, elle est utilisée pour détecter des substances illicites comme des drogues ou des explosifs. L'analyse par activation neutronique permet aussi d'optimiser le recyclage des batteries des véhicules électriques en caractérisant leur composition en fin de vie.

L'analyse par activation neutronique, bien que basée sur les réactions induites par des neutrons thermiques conduisant à la création d'un radio-isotope, peut être sujette à des interférences provenant d'autres réactions nucléaires induites cette fois par des neutrons rapides, également présents habituellement dans les champs neutroniques utilisés dans l'analyse par activation neutronique, ayant comme résultat la création du même radio-isotope. Ces réactions compliquent l'interprétation des résultats et rend la détermination précise de la composition des échantillons plus difficile. En effet, contrairement aux neutrons thermiques et les réactions de capture qui les caractérisent, les neutrons rapides ont la particularité de pouvoir induire diverses réactions nucléaires telles que des réactions de transmutation, des réactions de diffusion inélastique (n, n'y) et des réactions de fission (n,f).

Pour compenser ces interférences, il a déjà été proposé d'utiliser des coefficients correcteurs. Toutefois, la calibration ou la détermination de ces coefficients correcteurs est compliquée. Un exemple de cet état de l'art est représenté par la demande US7778783B2.

L'invention vise à améliorer l'analyse par activation neutronique en simplifiant et en améliorant la compensation des interférences.

L'invention est exposée dans le jeu de revendications joint.

L'invention sera mieux comprise à la lecture de la description qui va suivre, donnée uniquement à titre d'exemple non limitatif et faite en se référant aux dessins sur lesquels :
- la figure 1 est une illustration schématique, en coupe verticale, de l'architecture d'un système d'analyse d'un spécimen par activation neutronique,
- la figure 2 est une vue schématique, en coupe longitudinale, d'un insert du système de la figure 1,
- la figure 3 est une vue schématique, en coupe transversale, de l'insert de la figure 2,
- la figure 4 est un organigramme d'un procédé d'analyse d'un spécimen par activation neutronique, et
- la figure 5 est une illustration schématique, en perspective, d'un dispositif d'activation utilisable dans le système de la figure 1.

Dans cette description, la terminologie, les conventions et les définitions des termes utilisés dans ce texte sont introduites dans un chapitre I. Ensuite, des exemples détaillés de modes de réalisation sont décrits dans un chapitre II en référence aux figures. Dans un chapitre III, des variantes de ces modes de réalisation sont présentées. Enfin, les avantages des différents modes de réalisation sont précisés dans un chapitre IV.

### Chapitre I : Définitions, terminologies et conventions :

Dans les figures, les mêmes références sont utilisées pour désigner les mêmes éléments.

Dans la suite de cette description, les caractéristiques et fonctions bien connues de l'homme du métier ne sont pas décrites en détails.

Les figures sont orientées par rapport à un repère orthogonal XYZ, où les directions X et Y sont horizontales et la direction Z est verticale. Les termes tels que « au-dessus », « au-dessous », « haut », « bas », « supérieur », « inférieur » sont définis par rapport à la direction Z.

L'expression « un élément réalisé en un matériau A » ou l'expression « un élément en matériau A » signifie que le matériau A représente 90 % ou 95 % de la masse de cet élément.

Le symbole « * » désigne la multiplication scalaire.

Un neutron thermique désigne un neutron dont l'énergie est dans le domaine thermique, c'est-à-dire dont l'énergie est comprise entre 0,012 eV et 0,1 eV.

Un neutron rapide désigne un neutron dont l'énergie est supérieure à 0,8 MeV. Les neutrons rapides produisent des interférences.

Un neutron épithermique est un neutron dont l'énergie est supérieure à celle d'un neutron thermique et inférieure à celle d'un neutron rapide. Ces neutrons épithermiques ne produisent pas d'interférences.

Un matériau modérateur est un matériau capable de ralentir des neutrons rapides pour les transformer en neutrons thermiques. A cet effet un matériau modérateur présente une grande teneur en hydrogène. Ainsi, un matériau modérateur est ici défini comme étant un matériau qui contient au moins 2 % ou 3 % massique d'hydrogène et, de préférence, au moins 8 % ou 10 % massique d'hydrogène.

Une interférence est causée par une ou plusieurs réactions nucléaires produites par les neutrons rapides et qui dégradent la précision de l'analyse par activation neutronique. Ces réactions nucléaires sont typiquement une réaction de transmutation ou une réaction de fission. Une réaction de transmutation est une réaction lors de laquelle des neutrons rapides provoquent une réaction de transmutation dans les noyaux, conduisant à la formation d'un radio-isotope différent de l'élément d'origine. Ces réactions de transmutation peuvent donc entraîner la création de radio-isotopes, identiques à ceux créés par la capture neutronique des neutrons thermiques et qui pourtant ne sont pas liés à la capture neutronique des neutrons thermiques. Ces radio-isotopes créés par la réaction de transmutation interfèrent avec l'interprétation des résultats. Les réactions de transmutations les plus courantes sont les réactions (n,p) et (n,α). Elles surviennent lorsque le neutron incident possède une énergie suffisamment élevée, généralement au moins égale à la différence de masse entre les noyaux cibles et les noyaux produits, ainsi que l'énergie supplémentaire nécessaire pour surmonter la barrière de Coulomb pour l'émission de particules chargées. Dans les échantillons géologiques, cette interférence produite par les éléments principaux de la matrice est courante. Les réactions de transmutations importantes comprennent ^{2a}Si(n,p)²⁸Al, ³¹P(n,α)²⁸Al, ²⁷Al(n,p)²⁷Mg, ³⁰Si(n,α)²⁷Mg, ²⁴Mg(n,p)²⁴Na et ²⁷Al(n,α)²⁴Na. Dans les échantillons biologiques, des réactions de transmutation importantes sont : ²⁴Mg(n,p)²⁴Na et ⁵⁴Fe(n,α)⁵¹Cr. Dans les alliages, les réactions de transmutation les plus courantes comprennent ²⁷Al(n,p)²⁷Mg, ²⁸Si(n,p)²⁸Al, ³⁰Si(n,α)²⁷Mg, ⁵²Cr(n,p)⁵²V, ⁵⁴Fe(n,α)⁵¹Cr, ⁵⁵Mn(n,α)⁵²V, ⁵⁶Fe(n,p)⁵⁶Mn, ⁵⁹Co(n,α)⁵⁶Mn, ⁶⁰Ni(n,p)⁶⁰Co, ⁶²Ni(n,α)⁵⁹Fe, ⁶³Cu(n,α)⁶⁰Co, ⁶⁴Zn(n,p)⁶⁴Cu et ⁶⁵Cu(n,p)⁶⁵Ni [3, 4]. Lors d'une réaction de fission (n,f), des neutrons rapides induisent la fission nucléaire dans certains noyaux dits « fissiles » qui sont présents dans les échantillons analysés. Lorsqu'un noyau subit une fission, il se divise en deux noyaux plus légers et émet généralement plusieurs neutrons supplémentaires. Les noyaux plus légers peuvent être radioactifs et émettre des rayonnements gamma. Cette réaction de fission produit donc aussi des radio-isotopes indésirables et des émissions radiatives supplémentaires.

Une source de neutrons quasi-monoénergétique est une source qui émet des neutrons qui ont pratiquement tous la même énergie moyenne. Typiquement, pour une source quasi mono-énergétique, le ratio dE/Eₘ est inférieur ou égal à 10 % et, de préférence, inférieur à 5 % ou 2 %, où :
- Eₘ est l'énergie moyenne des neutrons émis par la source, et
- dE est la largeur à mi-hauteur du pic d'énergie centré sur l'énergie moyenne Eₘ.

Une concentration d'un élément, tel qu'un radio-isotope ou un composant recherché, désigne ici le ratio entre la quantité de cet élément dans un échantillon et la quantité totale de cet échantillon. La quantité peut être la masse. Dans ce dernier cas, la concentration de l'élément est égale au rapport de la masse de cet élément dans l'échantillon sur la masse totale de l'échantillon. La concentration peut aussi être exprimée dans d'autres unités comme le pourcentage atomique.

Un rayonnement gamma est composé de photons issus de la décroissance radioactive.

### Chapitre Il : Exemples de mode de réalisation

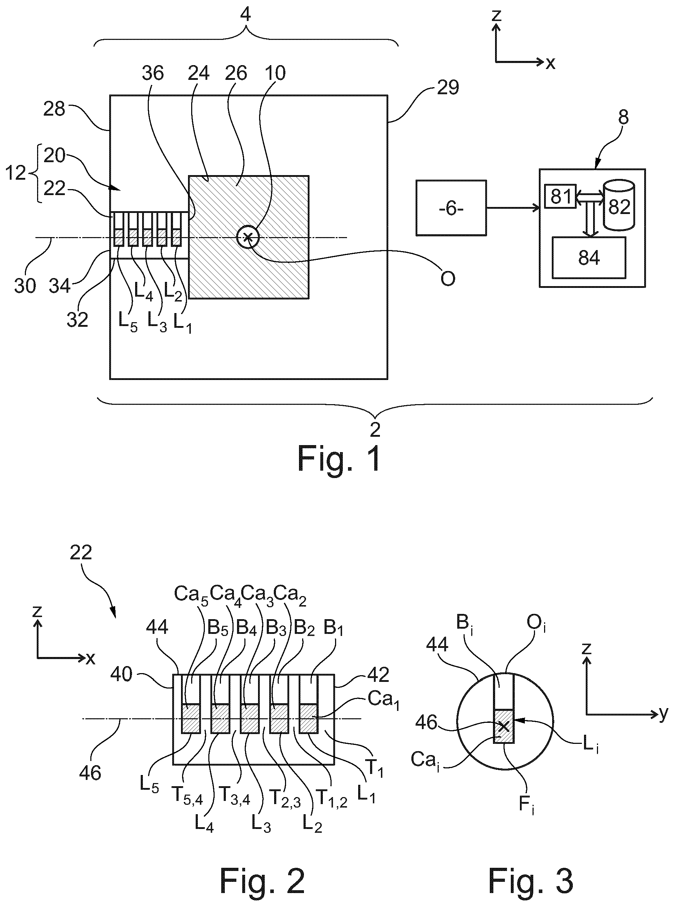

La figure 1 représente un système 2 d'analyse d'un spécimen par activation neutronique. Le système 2 permet de déterminer la concentration d'un composant recherché C dans le spécimen. Par la suite, ce mode de réalisation est décrit dans le cas particulier où le composant recherché C est l'aluminium ²⁷Al et où le spécimen comporte aussi du silicium ²⁸Si. La présence de silicium dans le spécimen génère des interférences car, lorsqu'il est exposé à des neutrons rapides, le silicium ²⁸Si peut être transmuté en radio-isotope ²⁸Al, c'est-à-dire le même radio-isotope que celui obtenu en exposant l'aluminium ²⁷Al à des neutrons thermiques.

Le système 2 comporte :
- un dispositif 4 d'activation d'échantillons du spécimen,
- une unité 6 de mesure du rayonnement ionisant issu de la décroissance radioactive de chaque échantillon activé, et
- une unité 8 de traitement configurée pour quantifier le composant recherché dans le spécimen à partir du rayonnement ionisant mesuré par l'unité de mesure.

Ici, le rayonnement ionisant mesuré par l'unité 6 est le rayonnement gamma de l'échantillon activé. Par exemple, l'unité 6 de mesure est un spectromètre.

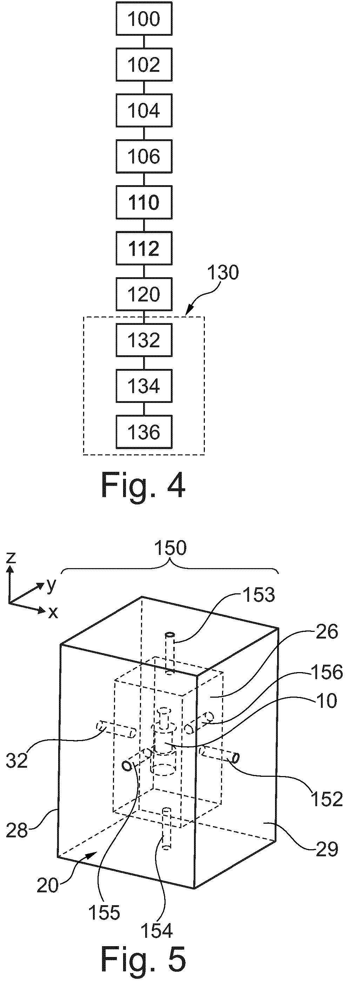

L'unité 8 de traitement est raccordée à l'unité 6 de mesure pour acquérir chaque mesure réalisée par l'unité 6. Typiquement, l'unité 8 de traitement comporte un microprocesseur programmable 81 et une mémoire 82 comportant les données et les instructions nécessaires pour la mise en œuvre du procédé de la figure 4 lorsque ces instructions sont exécutées par le microprocesseur 81. L'unité 8 comporte également une interface homme-machine 84 pour acquérir des données et communiquer des résultats d'analyse à un être humain. Par exemple, l'interface 84 comporte un écran et un clavier.

Le dispositif 4 est conçu pour activer simultanément plusieurs échantillons du même spécimen, c'est-à-dire pour irradier les échantillons avec des neutrons thermiques et des neutrons rapides. A cet effet, le dispositif 4 comporte :
- une source 10 de neutrons rapides apte à émettre des neutrons rapides,
- un matériau modérateur 12 traversé par les neutrons émis par la source 10, et
- Nb_{L} logements Lᵢ aptes chacun à recevoir un échantillon respectif du spécimen à irradier, où l'indice i identifie un logement spécifique parmi l'ensemble des logements.

La source 10 est une source quasi-mono énergétique. Par exemple, il s'agit ici d'un générateur deutérium-deutérium, également appelé « générateur d-D », qui produit des neutrons rapides dont l'énergie moyenne est égale à 2,45 MeV. Typiquement, les neutrons rapides émis par la source 10 sont presque uniformément répartis dans toutes les directions.

Dans ce mode de réalisation, le matériau modérateur 12 est de la polyéthylène haute densité. Toutefois, comme décrit dans le chapitre III, d'autres matériaux sont possibles. Le matériau modérateur 12 comporte, dans ce mode de réalisation, un bloc 20 et un insert 22 tous les deux réalisés dans ce même matériau modérateur. Le bloc 20 comporte une face intérieure 24 qui délimite une cavité 26 à l'intérieur de laquelle est logée la source 10. La source 10 est située au centre de cette cavité 26. A titre d'illustration, la cavité 26 est un parallélépipède rectangle de centre O et la source 10 est centrée sur ce centre O. Ainsi, en première approximation, les neutrons rapides émis par la source 10 sont émis depuis ce centre O. Les faces de la cavité 26 sont ici soit verticales soit horizontales. Par exemple, la cavité 26 est remplie d'air.

Le bloc 20 est un parallélépipède rectangle délimité par six faces extérieures. Chacune de ces faces extérieures s'étend parallèlement à une face correspondante de la cavité 26. Sur la figure 1, les références numériques 28 et 29 désignent deux faces extérieures verticales opposées du bloc 20. Le bloc 20 est centré sur le centre O. Par conséquent, les axes médians qui passent par les centres de deux faces extérieures opposées du bloc 20 se coupent au niveau de ce centre O. Sur la figure 1, la référence numérique 30 désigne celui de ces axes médians qui passe par les centres des faces 28 et 29.

L'épaisseur du bloc 20 au niveau de ces axes médians, c'est-à-dire la distance mesurée le long de ces axes médians entre les faces extérieure et intérieure du bloc 20, est choisie pour que le ratio Φₜ/Φᵣ soit supérieur à dix au niveau de la face extérieure 28, où Φₜ et Φᵣ sont les fluences, respectivement, de neutrons thermiques et de neutrons rapides émis par la source 10 mesurées au niveau de la face extérieure 28. Pour cela, ici, l'épaisseur du bloc 20 est, typiquement, au minimum de 20 cm.

Le bloc 20 comporte une niche 32 creusée le long de l'axe 30 et à l'intérieur de laquelle est reçu, à coulissement, l'insert 22. La niche 32 est centrée sur l'axe 30. La niche 32 comporte une ouverture 34 qui débouche sur la face extérieure 28. Ici, la niche 32 comporte aussi une ouverture 36 qui débouche à l'intérieur de la cavité 26.

La section transversale de la niche 32 est conformée pour guider en translation l'insert 22 entre une position rentrée et une position sortie. Dans la position rentrée, une face proximale 40 (Fig. 2) et une face distale 42 (Fig. 2) de l'insert 22 obstruent complètement, respectivement, les ouvertures 34 et 36. Dans la position sortie, l'insert 22 est entièrement situé à l'extérieur de la niche 32 et du bloc 20. De plus, ici, dans la position rentrée représentée sur la figure 1, les faces 40 et 42 de l'insert 22 affleurent, respectivement, la face 29 et la face intérieure du bloc 20.

Typiquement, les sections transversales de la niche 32 et de l'insert 22 sont constantes le long de l'axe 30. Ici, la forme de la section transversale de la niche 32 est la même que la forme de la section transversale de l'insert 22 sauf qu'elle est légèrement plus grande pour laisser subsister un jeu qui permet d'introduire l'insert 22 à l'intérieur de cette niche 32 puis d'enfoncer l'insert 22 à l'intérieur de la niche 22 jusqu'à sa position rentrée. Typiquement, ce jeu est inférieur à 1 mm ou 0,5 mm.

Un exemple de mode de réalisation de l'insert 22 est représenté plus en détail dans les figures 2 et 3. Dans cet exemple, la section transversale de l'insert 22 est un cercle centré sur un axe 46 de révolution. Ainsi, les faces proximale 40 et distale 42 sont reliées l'une à l'autre par une face cylindrique 44 dont la courbe directrice est un cercle et dont la génératrice est une droite parallèle à l'axe 46. La face 44 est centrée sur l'axe 46 de révolution parallèle à la direction X sur la figure 2. Dans la position rentrée de l'insert 22, l'axe 46 est confondu avec l'axe 30.

L'insert 22 comporte les logements Lᵢ. Ici, l'insert 22 est représenté dans le cas particulier où le nombre Nb_{L} de logements Lᵢ est égal à cinq. Les logements Lᵢ sont disposés les uns derrières les autres le long de l'axe 46. Les logements Lᵢ sont classés par ordre croissant d'indice i en partant de la face 42 et en allant vers la face 40. De préférence, tous les logements Lᵢ sont identiques sauf qu'ils n'occupent pas la même position le long de l'axe 46. Typiquement, chaque logement Lᵢ comporte deux parois verticales perpendiculaires à l'axe 46, un fond Fᵢ (Fig. 3) et, du côté opposé au fond Fᵢ, une ouverture Oᵢ (Fig. 3) qui débouche dans la face 44. L'ouverture Oᵢ permet d'introduire un échantillon du spécimen à analyser à l'intérieur du logement puis de retirer cet échantillon une fois qu'il a été activé. Ici, le fond Fᵢ du logement Lᵢ est situé dans sa partie inférieure de sorte que l'échantillon introduit dans ce logement repose sur ce fond Fᵢ.

Deux logements Lᵢ et Lᵢ₊₁ immédiatement consécutifs le long de l'axe 46 sont séparés l'un de l'autre par une tranche T_{i,i+1} de matériau modérateur d'épaisseur e_{i,i+1}. Chaque tranche T_{i,i+1} est formée par le matériau modérateur de l'insert 22 qui s'étend entre les parois verticales des logements Lᵢ et Lᵢ₊₁. Ici, toutes les tranches T_{i,i+1} ont la même épaisseur e_{i,i+1}. Le logement L₁ est séparé de la face 42 par une tranche T₁ du matériau modérateur d'épaisseur e₁. Par exemple, l'épaisseur e₁ est égale à l'épaisseur e_{i,i+1} des tranches T_{i,i+1}.

Avec une telle conformation de l'insert 22, les logements Lᵢ sont tous séparés de la source 10 par une épaisseur différente de matériau modérateur. Plus précisément, dans le cas particulier décrit ici, l'épaisseur de matériau modérateur qui sépare le logement Lᵢ de la source 10 est égale à i*e₁.

Pour chaque logement Lᵢ, le dispositif 4 d'activation comporte un bouchon Bᵢ. Ce bouchon Bᵢ est déplaçable de façon réversible le long d'un axe d'insertion, perpendiculaire à l'axe 46, entre une position fermée, représentée sur les figures 2 et 3, et une position ouverte. Dans la position fermée, le bouchon Bᵢ obstrue complètement l'ouverture Oᵢ et ne laisse subsister à l'intérieur du logement Lᵢ qu'une cavité Caᵢ à l'intérieur de laquelle est reçu l'échantillon. Typiquement, chaque cavité Caᵢ est centrée sur l'axe 46. Par exemple, la cavité Caᵢ est un parallélépipède.

Le bouchon Bᵢ est réalisé dans le même matériau modérateur que celui de l'insert 22. Ainsi, la cavité Caᵢ est entourée de matériau modérateur. Ceci permet d'uniformiser la quantité de matériau modérateur située autour de la cavité Caᵢ. A cet effet, l'épaisseur du bouchon Bᵢ, dans la direction verticale, est supérieure à 1 cm ou à 3 cm.

Dans la position ouverte, le bouchon n'obstrue pas l'ouverture Oᵢ de sorte qu'il est possible d'introduire ou de retirer un échantillon du logement Lᵢ.

Le bloc 20 et l'insert 22 sont réalisés par moulage ou par usinage d'un bloc initial en polyéthylène haute densité.

Un procédé d'analyse d'un spécimen à l'aide du système 2 est maintenant décrit en référence au procédé de la figure 4.

Le procédé débute par une étape 100 d'initialisation des différentes données à connaître pour procéder à l'analyse du spécimen. En particulier, lors de l'étape 100, la fluence Φₜⁱ de neutrons thermiques et la fluence Φᵣⁱ de neutrons rapides au niveau de chaque logement Lᵢ sont déterminées. Ces fluences Φₜⁱ et Φᵣⁱ dépendent notamment de l'épaisseur du matériau modérateur 12 à traverser par les neutrons avant d'atteindre le logement Lᵢ. Ici, ces fluences Φₜⁱ et Φᵣⁱ dépendent donc de la position du logement Lᵢ le long de l'axe 30 dans la position rentrée de l'insert 22. Étant donné que chaque logement Lᵢ est séparé de la source 10 par une épaisseur différente de matériau modérateur, les fluences Φₜⁱ et Φᵣⁱ sont différentes pour chaque logement Lᵢ. Plus précisément, c'est le ratio Φₜⁱ/Φᵣⁱ qui est différent pour chaque logement Lᵢ. Les fluences Φₜⁱ et Φᵣⁱ dépendent aussi d'autres paramètres comme l'énergie moyenne des neutrons rapides émis par la source 10 et la nature du matériau modérateur utilisé. Par contre, les fluences Φₜⁱ et Φᵣⁱ sont indépendantes de la composition du spécimen. Par exemple, les fluences Φₜⁱ et Φᵣⁱ sont déterminées par simulations numériques, telle que des simulations de Monte-Carlo. Les fluences Φₜⁱ et Φᵣⁱ peuvent aussi être mesurées expérimentalement.

Lors de l'étape 100, la section efficace σₜ(C) du composant recherché C est enregistrée dans la mémoire 82. La section efficace σₜ(C) est la section efficace de la réaction qui génère le radio-isotope R par capture d'un neutron thermique par le composant recherché C. De même, la section efficace σᵣ(Iₖ) de chaque composant interférent Iₖ est enregistrée dans la mémoire 82. La section efficace σᵣ(Iₖ) est la section efficace de la réaction qui génère le radio-isotope R par interaction d'un neutron rapide avec le composant interférent. Ces sections efficaces peuvent être obtenues à partir de la littérature scientifique ou déterminées par simulation ou expérimentalement. Dans cet exemple, le composant recherché C est l'aluminium ²⁷Al et le composant interférent Iₖ est le silicium ²⁸Si. Ainsi, lors de l'étape 100, les sections efficaces σₜ(²⁷Al) et σᵣ(²⁸Si) sont enregistrées dans la mémoire 82. Plus précisément, la section efficace σₜ(²⁷Al) est la section efficace de la réaction ²⁷Al(n,y)²⁸Al. La section efficace σᵣ(²⁸Si) est la section efficace de la réaction ²⁸Si(n,p)²⁸Al.

Lors d'une étape 102, des échantillons du spécimen sont prélevés. Il y a autant d'échantillons prélevés qu'il y a de logements Lᵢ. De préférence, les échantillons prélevés ont tous la même masse.

Ensuite, lors d'une étape 104, chaque échantillon prélevé est introduit à l'intérieur d'un logement respectif Lᵢ. Pour chaque logement Lᵢ, une fois l'échantillon introduit, le bouchon Bᵢ est déplacé de sa position ouverte vers sa position fermée. L'échantillon est alors emprisonné à l'intérieur de la cavité Caᵢ.

Lorsque chaque échantillon est emprisonné à l'intérieur d'une cavité Caᵢ respective, lors d'une étape 106, l'insert 22 est déplacé de sa position sortie vers sa position rentrée.

Une phase 110 d'activation simultanée des échantillons est alors exécutée. Lors de la phase 110, la source 10 émet, pendant une durée prédéterminée, des neutrons rapides. Une partie des neutrons émis traversent le matériau modérateur 12 et irradie les échantillons contenus dans chaque logement Lᵢ. Le matériau modérateur 12 ralentit certains des neutrons rapides pour les transformer en neutrons thermiques. La proportion de neutrons rapides transformés en neutrons thermiques varie en fonction de l'épaisseur traversée du matériau modérateur 12. Ainsi, pendant la phase 110, chaque échantillon est irradié avec des fluences Φₜⁱ et Φᵣⁱ de neutrons thermiques et rapides qui varient en fonction du logement Lᵢ à l'intérieur duquel est reçu cet échantillon. Cette irradiation provoque l'apparition du radio-isotope ²⁸Al du composant recherché dans chacun des échantillons. Le radio-isotope ²⁸Al est généré par la réaction ²⁷Al(n,y)²⁸Al de capture d'un neutron thermique par l'aluminium ²⁷Al. Ce radio-isotope ²⁸Al est aussi généré par la réaction ²⁸Si(n,p)²⁸Al lorsque le silicium ²⁸Si interagit avec un neutron rapide.

Après la durée prédéterminée, les échantillons sont dits « activés ». Chaque échantillon activé comporte une concentration Nⁱ(²⁸Al) en radio-isotope ²⁸Al qui dépend du logement dans lequel était situé cet échantillon pendant la phase d'activation. En effet, la concentration Nⁱ(²⁸Al) dépend notamment des fluences Φₜⁱ et Φᵣⁱ. De plus, la concentration Nⁱ(²⁸Al) dépend aussi de la concentration N^{c}(²⁷Al) d'aluminium ²⁷Al dans le spécimen ainsi que de la concentration N^{c}(^{2a}Si) de silicium ²⁸Si dans le spécimen.

Une fois les échantillons activés, lors d'une étape 112, l'insert 22 est déplacé vers sa position sortie et les bouchons Bᵢ sont déplacés vers leurs positions ouvertes puis les échantillons sont retirés des logements Lᵢ. Chaque échantillon retiré est associé à un identifiant du logement dans lequel il était situé.

Lors d'une phase 120 de mesure, chaque échantillon activé est placé dans l'unité 6 de mesure et l'unité 6 mesure le spectre du rayonnement gamma de chaque échantillon.

Les spectres mesurés sont ensuite acquis par l'unité 8 de traitement. Chaque spectre acquis est associé à l'identifiant i du logement Lᵢ dans lequel était situé l'échantillon correspondant à ce spectre. Par exemple, l'identifiant i du logement Lᵢ associé à un spectre est acquis par l'unité 8 par l'intermédiaire de l'interface 84. Les spectres ainsi acquis comportent notamment un pic caractéristique de la présence du radio-isotope ²⁸Al. L'amplitude de ce pic caractéristique est proportionnelle à la concentration de radio-isotope ²⁸Al présente dans l'échantillon.

Lors d'une phase 130 de quantification, l'unité 8 de traitement détermine la concentration d'aluminium ²⁷Al dans le spécimen à partir des mesures de l'unité 6 de mesure.

Pour cela, lors d'une étape 132, pour le spectre associé au logement Lᵢ, l'unité 8 établit la concentration Nⁱ(²⁸Al) en radio-isotope ²⁸Al. Cette concentration Nⁱ(²⁸Al) est établie à partir de l'amplitude du pic caractéristique du rayonnement gamma du radio-isotope ²⁸Al dans le spectre mesuré associé au logement Lᵢ.

Ensuite, lors d'une étape 134, les concentrations N^{c}(²⁷Al) et N^{c}(^{2a}Si) sont déterminées en résolvant un système (1) d'équations. Le système (1) d'équations est formé par les cinq équations suivantes : N^{c}(²⁷Al) = [Nⁱ(²⁸Al) - Cⁱ]/(σₜ(²⁷Al)*Φₜⁱ), où :
- i varie de un à cinq, et
- Cⁱ est un coefficient correcteur d'interférence égal, dans cet exemple, à N^{c}(^{2a}Si)*σᵣ(²⁸Si)* Φᵣⁱ.

Dans le système (1), les concentrations N^{c}(²⁷Al) et N^{c}(^{2a}Si) sont les inconnues. Les termes σₜ(²⁷Al), Φₜⁱ, σᵣ(²⁸Si) et Φᵣⁱ ont été pré-enregistrés lors de l'étape 100 d'initialisation. Les termes Nⁱ(²⁸Al) sont ceux établis lors de l'étape 132. Le système (1) comporte donc deux inconnues et cinq équations. Un tel système d'équations est, par exemple, résolu en utilisant l'algorithme ML-EM (*Maximum Likelihood reconstruction (ML) using Expectation Maximization (EM)*)*.*

A l'issue de l'étape 134, lors d'une étape 136, la concentration N^{c}(²⁷Al) déterminée est communiquée à un être humain par l'intermédiaire de l'interface 84.

La figure 5 représente un dispositif d'activation 150 susceptible d'être utilisé à la place du dispositif 4 d'activation. Le dispositif 150 est identique au dispositif 4 sauf qu'il comporte une niche dans chaque face du bloc 20. Ici, le bloc 20 est un parallélépipède rectangle. Ainsi, en plus de la niche 32, le bloc 20 comporte cinq niches supplémentaires 152 à 156 visibles, sur la figure 5, par transparence à travers le bloc 20. Les niches 152 à 156 sont identiques à la niche 32 sauf qu'elles sont situées au centre d'une face respective du bloc 20.

Le dispositif 150 d'activation comporte également six inserts, c'est-à-dire l'insert 22 et cinq autres inserts identiques à l'insert 22.

Ainsi, il est possible d'introduire un insert dans chacune des niches 32 et 152 à 156. Dès lors, lors de la phase d'activation, il est possible d'activer simultanément trente échantillons du spécimen.

Dans le cas du dispositif 150, lors de la phase d'activation, il existe donc six logements L_{i,p} séparés de la source 10 par la même épaisseur de matériau modérateur, où l'indice p est un identifiant de l'insert dans lequel est réalisé ce logement L_{i,p}. Dans ces conditions, lors de l'étape 132, l'unité 8 de traitement obtient six concentrations N^{i,p}(²⁸Al) en radio-isotope ²⁸Al associées à la même épaisseur traversée i de matériau modérateur. Pour chaque épaisseur traversée i, ces six concentrations N^{i,p}(²⁸Al) sont moyennées pour obtenir une concentration moyenne Nⁱ(²⁸Al). Ensuite, lors de l'étape 134, c'est cette concentration moyenne Nⁱ(²⁸Al) qui est utilisée dans le système (1) d'équations.

### Chapitre III : Variantes :

### Variantes du dispositif d'activation :

D'autres sources de neutrons sont utilisables. Par exemple, le générateur deutérium- deutérium peut être remplacé par un générateur deutérium-tritium (d-T) qui produit des neutrons dont l'énergie moyenne est égale à 14,1 MeV. La source de neutrons rapides peut aussi être un réacteur nucléaire, un accélérateur de particules ou une source isotopique telle qu'une source Am-Be ou ²⁵²Cf. La source de neutrons rapides peut être une source de neutrons continue ou pulsée.

D'autres matériaux modérateurs sont utilisables. Par exemple, le polyéthylène haute densité peut être remplacé par de la paraffine. Le polyéthylène haute densité (HDP) peut aussi être remplacé par du polyéthylène moyenne densité (MDPE), du polyéthylène linéaire basse densité (LLDPE), du polyéthylène réticulé (PEX), du polyéthylène basse densité (LDPE), du polypropylène (PP), du polyméthylpentène (PMP), du polybutène-1 (PB-1) ou d'autres polyalpha oléfines. Dans une autre variante, le polyéthylène est remplacé par du béton contenant 2 % ou 3 % massique d'hydrogène.

Le matériau modérateur peut être un mélange, de préférence homogène, de plusieurs matériaux modérateurs différents. Le matériau modérateur peut aussi être composé d'une juxtaposition, les unes derrières les autres, de plusieurs couches en matériaux modérateurs différents.

D'autres formes sont possibles pour le bloc 20. Par exemple, au lieu d'être un parallélépipède, le bloc 20 peut être une sphère ou un cylindre de section circulaire.

La cavité 26 peut aussi avoir d'autres formes. Par exemple, en variante, la cavité 26 est sphérique ou cylindrique de section circulaire.

De nombreuses variantes des niches sont possibles. En particulier, le nombre de niches peut être modifié. Par exemple, il est aussi possible de prévoir plusieurs niches qui débouchent dans la même face extérieure 28 du bloc 20.

Dans une autre variante, la niche 32 ne débouche pas à l'intérieur de la cavité 26. Dans ce cas, la niche 32 comporte un fond séparé de la cavité 26 par une épaisseur du matériau modérateur. Dans cette variante, dans sa position rentrée, la face distale 42 de l'insert 22 est directement en appui sur ce fond de la niche.

Dans une autre variante, l'insert 22 est réalisé dans un matériau modérateur différent de celui utilisé pour réaliser le bloc 20.

La section transversale de l'insert 22 n'est pas nécessairement circulaire. Par exemple, en variante, la section transversale de l'insert 22 est rectangulaire.

Les dimensions de la section transversale de l'insert 22 peuvent aussi être très inférieures aux dimensions de la section transversale de la niche 32. Dans ce cas, un adaptateur, réalisé dans le même matériau modérateur que celui de l'insert 22, est utilisé pour combler l'espace entre l'insert 22 et la niche 32. Cet adaptateur est dépourvu de logement. Par exemple, l'utilisation d'un adaptateur permet d'utiliser un insert de section transversale rectangulaire dans une niche dont la section transversale est circulaire. L'utilisation d'adaptateurs permet aussi d'utiliser, dans la même niche, différents inserts de sections transversales différentes.

Dans un mode de réalisation simplifié, les bouchons Bᵢ sont omis.

Les épaisseurs e_{i,i+1} et l'épaisseur e₁ ne sont pas nécessairement toutes égales.

En variante, dans la position rentrée, les logements Lᵢ sont alignés les uns derrières les autres le long d'un axe qui ne passe pas par le centre O de la source 10. En fait, dans la position rentrée, il est aussi possible que les logements Lᵢ ne soient pas alignés les uns derrières les autres le long d'un même axe rectiligne. Par exemple, en variante, dans la position rentrée, chaque logement Lᵢ est situé sur un axe respectif qui passe par le centre O de la source 10 et ces axes respectifs sont espacés angulairement les uns des autres de manière à ce que l'échantillon reçu dans chacun de ces logements Lᵢ est irradié par des neutrons qui n'ont pas traversé, au préalable, un autre échantillon reçu dans un autre logement.

Dans un autre mode de réalisation, les logements Lᵢ sont directement creusés dans le bloc 20 et l'insert 22 est omis. Dans ce cas, chaque logement Lᵢ débouche directement sur une face extérieure du bloc 20 afin de permettre l'introduction et le retrait de l'échantillon dans ce logement Lᵢ.

Dans une variante très simplifiée, le dispositif d'activation comporte un seul logement Lᵢ et l'épaisseur traversée de matériau modérateur avant d'atteindre cet unique logement L₁ est réglable. Par exemple, le dispositif d'activation comporte :
- un insert identique à l'insert 22 sauf qu'il comporte seulement le logement L₁,
- la niche 32 comporte un fond en matériau modérateur qui la sépare de la cavité 26, et
- un jeu de cales en matériau modérateur de différentes épaisseurs.

Dans le cas du dispositif d'activation ci-dessus avec un unique logement L₁, pour mettre en œuvre le procédé d'analyse, les échantillons sont activés les uns après les autres. Par exemple, un premier échantillon est placé à l'intérieur du logement L₁, puis l'insert est introduit à l'intérieur de la niche 32 jusqu'à ce que sa face distale 42 vienne en appui contre le fond de la niche 32. Dans cette position de l'insert, le premier échantillon est activé. Ensuite, le premier échantillon est retiré du logement L₁ et remplacé par un second échantillon. Avant d'introduire l'insert dans la niche 32, l'une des cales en matériau modérateur est introduite à l'intérieur de la niche 32 et poussée jusqu'à ce qu'elle vienne en appui sur le fond de la niche. Ensuite, l'insert contenant le second échantillon est introduit dans la niche jusqu'à ce que sa face distale 42 vienne en appui contre la cale. Dans cette position, le second échantillon est irradié par des neutrons qui traversent une épaisseur de matériau modérateur plus grande que dans le cas du premier échantillon. Ces opérations sont réitérées pour chacune des cales du jeu de cales afin d'activer plusieurs échantillons en utilisant différentes épaisseurs traversées de matériau modérateur.

Dans une variante de ce dispositif d'activation avec un unique logement, toutes les cales ont la même épaisseur et les différentes épaisseurs traversées de matériau modérateur sont obtenues en introduisant à l'intérieur de la niche un nombre plus ou moins grand de ces cales.

De nombreuses géométries différentes sont possibles pour les cavités Caᵢ. En particulier, la largeur, la longueur ou la profondeur des cavités Caᵢ peut être modifiée. Ainsi, en variante, les cavités Caᵢ ne sont pas des parallélépipèdes. Par exemple, les cavités Caᵢ peuvent être cylindriques de section circulaire ou les cavités Caᵢ peuvent être sphériques.

### Variantes du système d'analyse :

D'autres rayonnements ionisants issus de la décroissance radioactive de l'échantillon activé sont utilisables à la place du rayonnement gamma. Par exemple, en variante, l'unité 6 mesure le rayonnement bêta ou le rayonnement alpha de l'échantillon.

L'unité 6 de mesure peut être intégrée dans le dispositif d'activation afin de permettre une mesure du rayonnement ionisant de chaque échantillon alors que celui-ci est encore situé à l'intérieur du bloc 20.

### Variantes du procédé d'analyse :

En variante, le nombre Nbₑ d'équations dans le système (1) d'équations est supérieur à deux et inférieur au nombre de logements Lᵢ. Par exemple, le nombre Nbₑ est égal au nombre d'inconnues de ce système d'équations. C'est par exemple le cas si une partie des équations de la forme N^{c}(C) = [Nⁱ(R) - Cⁱ]/(σₜ(C)*Φₜⁱ) sont ignorées ou si des logements Lᵢ ne sont pas utilisés pour activer des échantillons.

Si nécessaire, en plus de ce qui a déjà était décrit, les phases d'activation et de mesure peuvent être réitérées plusieurs fois pour la même épaisseur traversée de matériau modérateur. Ces mesures redondantes sont ensuite, par exemple, moyennées afin d'augmenter la précision de la mesure comme décrit dans le cas particulier du dispositif 150 d'activation. A la place de moyenner les mesures redondantes, il est aussi possible d'introduire dans le système d'équations (1), une équation pour chaque mesure redondante réalisée.

Dans une variante, les échantillons sont activés les uns après les autres et non pas simultanément. Par exemple, pour cela, un premier échantillon est placé dans un premier logement puis activé. Ensuite, le premier échantillon activé est retiré du premier logement et un second échantillon est placé dans un second logement puis activé. Ces opérations sont réitérées autant de fois que nécessaire pour activer plusieurs échantillons en utilisant différentes épaisseurs traversées de matériau modérateur.

En variante, pour accroître la précision de la mesure de chaque concentration Nⁱ(R), pour chaque échantillon, cette mesure est répétée plusieurs fois à différents instants. Ces instants sont suffisamment espacés les uns des autres pour que le rayonnement ionisant mesuré soit différent à chacun de ces instants à cause de la décroissance radioactive.

Le coefficient correcteur Cⁱ peut aussi comporter des termes supplémentaires. C'est par exemple le cas si le spécimen comporte plusieurs composants interférents Iₖ. Dans ce cas, le coefficient Cⁱ s'écrit sous la forme d'une somme de plusieurs termes N^{c}(Iₖ)*σₜ(Iₖ)*Φᵣⁱ, où l'indice k identifie le composant interférent.

Ce qui a été décrit précédemment s'applique aussi à la quantification simultanée de plusieurs composants recherchés Cₘ dans le même échantillon, où l'indice m identifie le composant recherché et son radio-isotope Rₘ. Dans ce cas, tout ce qui a été décrit dans le cas particulier du composant recherché C est réalisé pour chacun des composants recherchés Cₘ. En particulier, la phase d'activation est commune pour tous les composants recherchés Cₘ. Si l'unité 6 mesure le spectre gamma des échantillons activés, la phase 120 de mesure peut aussi être commune à tous les composants recherchés Cₘ. Ensuite, lors de la phase de quantification, une concentration Nⁱ(Rₘ) est établie pour chaque radio-isotope Rₘ et pour chaque épaisseur traversée i. Enfin, pour déterminer chaque concentration N^{c}(Cₘ), un système d'équations respectif similaire au système d'équations (1) est résolu. Le système d'équations résolu pour déterminer la concentration N^{c}(Cₘ) est identique au système d'équations (1) sauf que :
- les données et les mesures relatives au radio-isotope R sont remplacées par les données et les mesures correspondantes relatives au radio-isotope Rₘ, et
- les données relatives à chaque composant interférent sont remplacées par les données correspondantes du ou des composants interférents qui réagissent avec les neutrons rapides pour générer des radio-isotopes Rₘ.

Des échantillons de matériaux différents peuvent aussi être activés simultanément. Par exemple, pour cela, le dispositif 150 est utilisé. Le dispositif 150 permet d'activer simultanément des échantillons de six matériaux différents A à F. A cet effet, cinq échantillons du matériau A sont introduits dans chacun des logements L_{i,p} du même insert p. La même chose est faite pour les matériaux B à F mais en utilisant pour chacun un insert respectif. Les échantillons de chaque matériau A à F sont alors simultanément activés lors de la phase 110. Ensuite, lors de l'étape 132, l'unité 8 de traitement établit, pour chaque matériau A à F, cinq concentrations en radio-isotope différentes associées chacune à une épaisseur i différente de matériau modérateur. Ensuite, pour chaque matériau A à F, la concentration corrigée en composant recherché est déterminée comme décrit dans l'étape 134.

Plusieurs des variantes décrites ci-dessus peuvent être combinées dans un même mode de réalisation.

### Chapitre IV : Avantages des modes de réalisation décrits :

Le fait d'utiliser des mesures du rayonnement ionisant de plusieurs échantillons activés en utilisant différentes épaisseurs traversée du même matériau modérateur permet l'établissement de plusieurs concentrations Nⁱ(R) pour des fluences différentes connues de neutrons thermiques et rapides. A partir de ces différentes concentrations Nⁱ(R) établies pour différentes fluences connues, il est possible de compenser simplement et efficacement les interférences. Il est donc possible de déterminer plus précisément la concentration N^{c}(C) du composant recherché.

Le fait que le nombre Nbₑ d'équations dans le système d'équations (1) soit supérieur au nombre d'inconnues, permet d'améliorer encore plus la précision de l'analyse.

Le fait d'irradier en même temps les différents échantillons permet d'augmenter la précision car, dans ce cas, les différences entre les fluences de neutrons thermiques et rapides incidents sur chaque échantillon proviennent seulement des différences d'épaisseurs traversées du matériau modérateur et non pas d'une variation temporelle de la source de neutrons.

Le fait que le dispositif d'activation comporte plusieurs logements pour recevoir simultanément plusieurs échantillons du spécimen séparés de la source de neutrons par différentes épaisseurs de matériau modérateur, permet d'activer simultanément plusieurs échantillons en utilisant différentes épaisseurs traversées du matériau modérateur et donc avec des ratios Φₜ/Φᵣ différents.

Le fait d'aligner les logements Lᵢ les uns derrière les autres le long de l'axe 30 qui passe par le centre O de la source 10 permet une détermination plus simple et plus précise des fluences de neutrons thermiques et rapides pour chaque épaisseur traversée du matériau modérateur. Cela accroît donc la précision du procédé d'analyse.

L'utilisation d'un insert simplifie l'introduction et le retrait des échantillons dans les logements.

L'utilisation des bouchons Bᵢ en matériau modérateur pour refermer les logements Li permet d'uniformiser la répartition du matériau modérateur autour de l'échantillon lors de son activation. Cela simplifie et augmente la précision des fluences de neutrons thermiques et rapides déterminées pour chaque logement Lᵢ. En fin de compte, la précision du procédé d'analyse est améliorée.

Le fait de mesurer le rayonnement gamma permet d'obtenir des spectres avec une très bonne résolution dans lesquels il est plus facile de distinguer les différents pics caractéristiques de différents radio-isotopes. Ainsi, la mesure du rayonnement gamma de l'échantillon permet d'améliorer la précision du procédé et du système d'analyse.

## Revendications

1. Procédé d'analyse d'un spécimen par activation neutronique, ce procédé comportant :
- une phase (110) d'activation lors de laquelle :
- une source de neutrons rapides émet des neutrons rapides, et
- au moins un échantillon du spécimen est irradié avec des neutrons émis par la source de neutrons rapides et qui ont traversé une épaisseur de matériau modérateur, ce matériau modérateur ralentissant une partie des neutrons rapides incidents pour les transformer en neutrons thermiques, les fluences de neutrons rapides et de neutrons thermiques incidents sur l'échantillon étant fonction de l'épaisseur traversée de matériau modérateur,
- une phase (120) de mesure du rayonnement ionisant issu de la décroissance radioactive de chaque échantillon ainsi activé, puis
- une phase (130) de quantification d'un composant recherché dans le spécimen à partir du rayonnement ionisant mesuré,
**caractérisé en ce que** :
- lors de la phase (110) d'activation, plusieurs échantillons du spécimen sont activés en utilisant, pour chaque échantillon, une épaisseur traversée de matériau modérateur différente de l'épaisseur traversée utilisée pour activer les autres échantillons, et
- lors de la phase (130) de quantification :
- pour chaque échantillon activé, une concentration Nⁱ(R) d'un radio-isotope du composant recherché dans cet échantillon activé est établie (132) en utilisant seulement le rayonnement ionisant mesuré de cet échantillon, où l'exposant i est un identifiant de l'épaisseur traversée utilisée pour activer cet échantillon et R est un identifiant du radio-isotope du composant recherché, puis
- une concentration N^{c}(C) du composant recherché dans le spécimen est déterminée (134) à partir des différentes concentrations Nⁱ(R) établies et de fluences prédéterminées de neutrons thermiques et de neutrons rapides pour chacune des épaisseurs du matériau modérateur utilisées pour activer les échantillons.

2. Procédé selon la revendication 1, dans lequel, lors de la phase de quantification, la concentration N^{c}(C) est déterminée en résolvant un système d'équations comportant Nbₑ équations de la forme N^{c}(C) = [Nⁱ(R) - Cⁱ]/(σₜ(C)*Φₜⁱ) et au moins deux inconnues N^{c}(C) et N^{c}(Iₖ), où
- Nbₑ est un nombre supérieur ou égal au nombre d'inconnues et inférieur ou égal au nombre d'épaisseurs différentes de matériau modérateur utilisées pour activer les échantillons,
- σₜ(C) est la section efficace prédéterminée de la réaction qui génère le radio-isotope R par capture d'un neutron thermique par le composant recherché,
- Φₜⁱ est une fluence prédéterminée de neutrons thermiques pour l'épaisseur traversée de matériau modérateur identifiée par l'exposant i,
- Cⁱ est un coefficient correcteur d'interférence comportant au moins un terme N^{c}(Iₖ)*σᵣ(Iₖ)* Φᵣⁱ,
- N^{c}(Iₖ) est la concentration d'un composant interférent Iₖ, le composant Iₖ étant capable, lorsqu'il interagit avec un neutron rapide émis par la source de neutrons rapides, de générer un radio-isotope identique au radio-isotope généré par les neutrons thermiques lorsqu'ils réagissent avec le composant recherché,
- σᵣ(Iₖ) est la section efficace prédéterminée de la réaction qui génère le radio-isotope R par interaction d'un neutron rapide avec le composant interférent Iₖ,
- Φᵣⁱ est une fluence prédéterminée de neutrons rapides pour l'épaisseur traversée de matériau modérateur identifiée par l'exposant i.

3. Procédé selon la revendication 2, dans lequel le nombre Nbₑ est supérieur au nombre d'inconnues du système d'équations à résoudre.

4. Procédé selon l'une quelconque des revendications précédentes, dans lequel, lors de la phase (110) d'activation, lesdits plusieurs échantillons sont activés en les irradiant en même temps avec des neutrons émis par la même source de neutrons rapides.

5. Système d'analyse d'un spécimen par activation neutronique, ce système comportant :
- un dispositif (4) d'activation d'échantillons du spécimen, ce dispositif comportant :
- une source (10) de neutrons rapides apte à émettre des neutrons rapides,
- un matériau modérateur (12) exposé aux neutrons rapides émis par la source de neutrons rapides, ce matériau modérateur étant apte à ralentir une partie des neutrons rapides incidents pour les transformer en neutrons thermiques, et
- au moins un logement (Lᵢ) apte à recevoir un échantillon du spécimen à irradier par des neutrons émis par la source de neutrons rapides et qui ont traversé une épaisseur du matériau modérateur, les fluences de neutrons rapides et de neutrons thermiques incidents sur l'échantillon reçu dans le logement étant fonction de l'épaisseur traversée du matériau modérateur,
- une unité (6) de mesure du rayonnement ionisant issu de la décroissance radioactive de chaque échantillon activé à l'aide du dispositif d'activation, et
- une unité (8) de traitement configurée pour quantifier un composant recherché dans le spécimen à partir du rayonnement ionisant mesuré par l'unité de mesure,
**caractérisé en ce que** :
- le dispositif (4) d'activation est apte à permettre l'activation de plusieurs échantillons du spécimen en utilisant, pour chaque échantillon, une épaisseur traversée du matériau modérateur différente de l'épaisseur traversée utilisée pour activer les autres échantillons, et
- l'unité (8) de traitement est configurée pour :
- pour chaque échantillon activé, établir une concentration Nⁱ(R) d'un radio-isotope du composant recherché dans cet échantillon activé en utilisant seulement le rayonnement ionisant mesuré de cet échantillon, où l'exposant i est un identifiant de l'épaisseur utilisée pour activer cet échantillon et R est un identifiant du radio-isotope du composant recherché, puis
- déterminer une concentration N^{c}(C) du composant recherché dans le spécimen à partir des différentes concentrations Nⁱ(R) établies et de fluences prédéterminées de neutrons thermiques et de neutrons rapides pour chacune des épaisseurs traversées du matériau modérateur utilisées pour activer les échantillons.

6. Système selon la revendication 5, dans lequel le dispositif d'activation comporte plusieurs logements (Lᵢ) aptes chacun à recevoir un échantillon respectif du spécimen à irradier par des neutrons émis par la source de neutrons rapides et qui ont traversé une épaisseur du matériau modérateur, ces logements étant disposés les uns par rapport aux autres de manière à ce que chaque logement corresponde à une épaisseur traversée du matériau modérateur différente de l'épaisseur traversée correspondant aux autres logements.

7. Système selon la revendication 6, dans lequel les logements (Lᵢ) sont disposés les uns derrière les autres le long d'un axe rectiligne (30) qui passe par le centre de la source de neutrons.

8. Système selon la revendication 7, dans lequel le dispositif d'activation comporte :
- une niche (32 ; 152-156) creusée à l'intérieur d'un bloc solide (20) en matériau modérateur, cette niche comportant une ouverture (34) débouchant sur une face extérieure (28) du bloc en matériau modérateur, et
- un insert (22) apte à être introduit à l'intérieur de la niche par l'intermédiaire de l'ouverture, cet insert étant réalisé dans un matériau modérateur dans lequel sont creusés chacun des logements (Lᵢ ; L_{i,p}).

9. Système selon l'une quelconque des revendications 5 à 8, dans lequel :
- chaque logement comporte :
- une ouverture (Oᵢ) par laquelle l'échantillon est introduit et, en alternance, retiré du logement, et
- un fond (Fᵢ) situé du côté opposé à l'ouverture du logement, et
- pour chaque logement, le dispositif d'activation comporte un bouchon (Bᵢ) en matériau modérateur déplaçable de façon réversible le long d'un axe d'insertion de ce bouchon entre :
- une position fermée dans laquelle le bouchon obstrue complètement l'ouverture du logement et ne laisse subsister à l'intérieur du logement qu'une cavité entourée de matériau modérateur, et
- une position ouverte dans laquelle l'échantillon peut être introduit et retiré du logement,
l'épaisseur de ce bouchon, dans une direction parallèle à son axe d'insertion, étant supérieure à 1 cm.

10. Système selon l'une quelconque des revendications 5 à 9, dans lequel l'unité (6) de mesure est apte à mesurer le rayonnement gamma issu de la décroissance radioactive de l'échantillon activé à l'aide du dispositif d'activation.

11. Dispositif d'activation d'échantillons pour la mise en œuvre d'une phase d'activation d'un procédé d'analyse d'un spécimen par activation neutronique conforme à la revendication 1, ce dispositif comportant :
- une source (10) de neutrons rapides apte à émettre des neutrons rapides,
- un matériau modérateur (12) directement exposé aux neutrons rapides émis par la source de neutrons rapides, ce matériau modérateur étant apte à ralentir une partie des neutrons rapides incidents pour les transformer en neutrons thermiques, et
- au moins un logement (Lᵢ) apte à recevoir un échantillon du spécimen à irradier par des neutrons émis par la source de neutrons rapides et qui ont traversé une épaisseur du matériau modérateur, les fluences de neutrons rapides et de neutrons thermiques incidents sur l'échantillon reçu dans le logement étant fonction de l'épaisseur traversée du matériau modérateur,
**caractérisé en ce que** le dispositif d'activation comporte plusieurs logements (Lᵢ) aptes chacun à recevoir un échantillon respectif du spécimen à irradier par des neutrons émis par la source de neutrons rapides et qui ont traversé une épaisseur du matériau modérateur, ces logements étant disposés les uns par rapport aux autres de manière à ce que chaque logement correspond à une épaisseur traversée du matériau modérateur différente de l'épaisseur traversée correspondant aux autres logements.
